# EUROPEAN PATENT SPECIFICATION

(11) **EP 4 193 469 B1**
(45) Date of publication and mention of the grant of the patent: **21.10.2026**
(21) Application number: 20754382.8
(22) Date of filing: 05.08.2020
(51) Int. Cl.: H04B 1/18

(54) **ULTRA-WIDEBAND NON-REFLECTIVE FRONT-END IN MULTIBAND SYSTEM**
ULTRABREITBANDIGES NICHTREFLEKTIERENDES FRONTEND IN EINEM MEHRBANDSYSTEM
FRONTAL NON RÉFLÉCHISSANT À BANDE ULTRALARGE DANS UN SYSTÈME MULTIBANDE

(43) Date of publication of application: 14.06.2023
(73) Proprietor: Telefonaktiebolaget LM ERICSSON (PUBL), 16483 Stockholm (SE)
(72) Inventor: HUANG, Xue, 171 43 Solna (SE)
(74) Representative: Ericsson
(86) International application number: PCT/IB2020/057375
(87) International publication number: WO 2022/029468

(56) References cited:
- EP-A1- 3 251 217
- US-A1- 2011 117 862

## Description

### TECHNICAL FIELD

The present disclosure is related to wireless communication systems and more particularly to an ultra-wideband non-reflective front-end in a multiband system.

### BACKGROUND

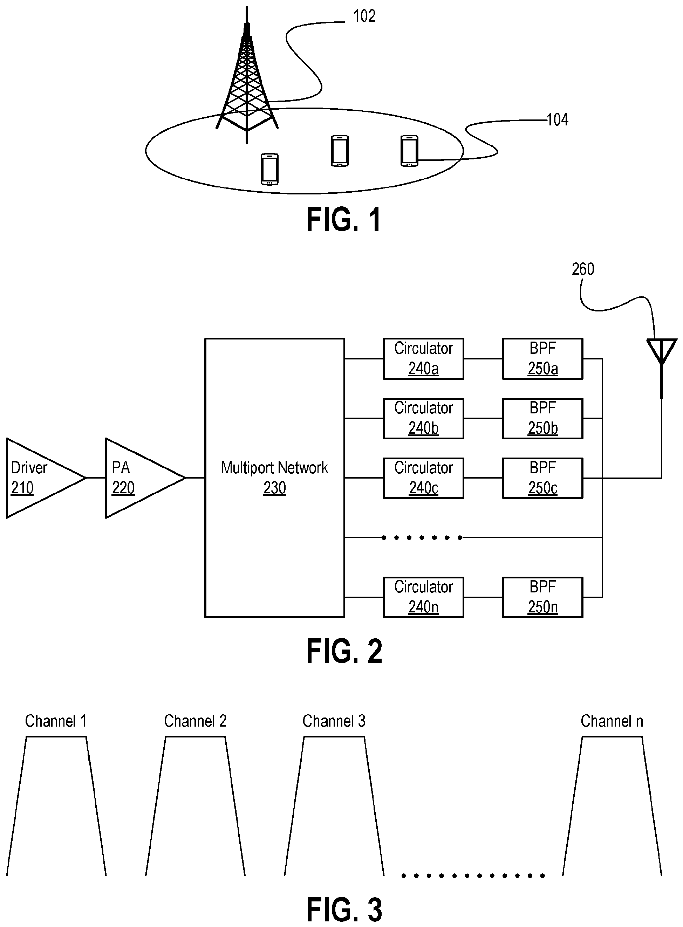

FIG. 1 illustrates an example of a 5^{th} Generation ("5G") network including a 5G base station ("gNB") 102 and multiple communication devices 104 (also referred to as user equipment ("UE")).

FIG. 2 illustrates an example of a wideband front-end for a transmitter system. A driver 210 feeds a power amplifier ("PA") 220, which inputs a wideband signal into a multiport network that divides the wideband signal into n number of portions. Each portion passes through a circulator 240a-n and a corresponding band pass filter ("BPF") 250a-n to produce the n channels illustrated in FIG. 3. Due to the system being a multiband system, the harmonic and intermodulation products can be very wide in spectrum. The in-band signals will be transmitted to the antenna 260 and the out of band signals will be reflected back by the BPFs 250a-n to the PA 220. Documents EP3251217 A1 and US 2011/117862 A1 are examples of prior art.

### SUMMARY

According to some embodiments, a method of operating a network node in a communications network is provided.

According to other embodiments, a network node, computer program, and/or computer program product is provided for performing the above method.

The invention is defined in the appended claims.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
FIG. 1 is a schematic diagram illustrating an example of a 5^{th} generation ("5G") network, also referred to as a new radio ("NR") network;
FIG. 2 is a block diagram illustrating an example of a wide multiband transmitter system;
FIG. 3 is a schematic diagram illustrating an example of channels provided by the transmitter system in FIG. 2;
FIG. 4 is a circuit diagram illustrating an example of an ultra-wideband feedforward circuit;
FIG. 5 is a block diagram illustrating an example of a non-reflective front-end having band pass filters ("BPFs") that consist of a low pass filter ("LPF") and a high pass filter ("HPF");
FIG. 6 is a block diagram illustrating an example of a wideband front-end in accordance with some embodiments
FIG. 7 is a block diagram illustrating an example of how lowpass and high pass filters are cascaded in accordance with some embodiments;
FIG. 8 is a block diagram illustrating an example of a non-reflective cascaded front-end in accordance with some embodiments;
FIG. 9 is a block diagram illustrating an example of a communication device in accordance with some embodiments;
FIG. 10 is a block diagram illustrating an example of a radio access network ("RAN") node in accordance with some embodiments;
FIGS. 11-12 are flow charts illustrating examples of processes performed by a network node having an ultra-wideband non-reflective front-end in accordance with some embodiments.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

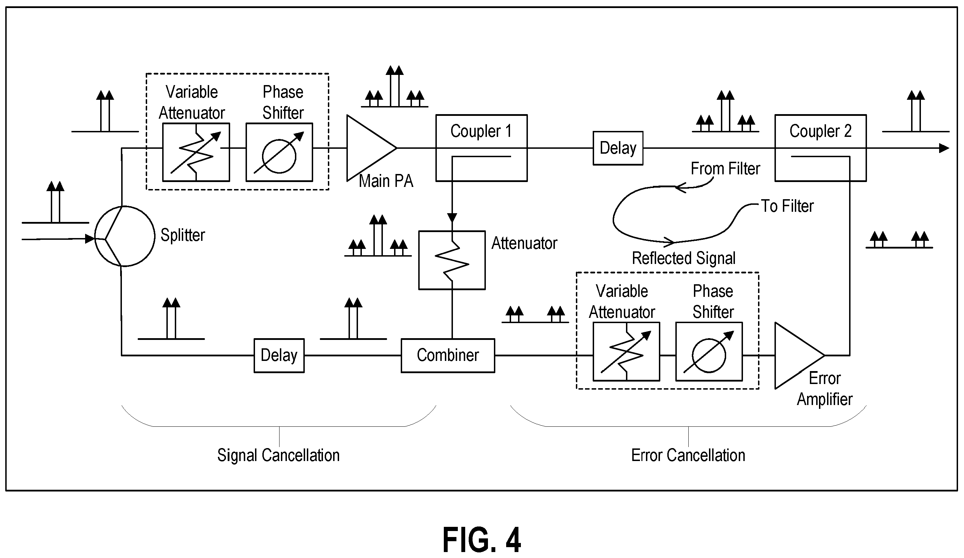

FIG. 4 illustrates an example of a ultra-wideband feedforward circuit. In this example, the reflected signals can be amplified by the error amplifier again and again and this will cause a reliability problem with the system, or reduce the performance of the front-end system. Therefore, a non-reflective front-end can be used to improve performance. A non-reflective front-end being used with a transmitter can cause all in-band signal to be transmitted to an antenna port and the out of band signals to be absorbed by the front-end itself.

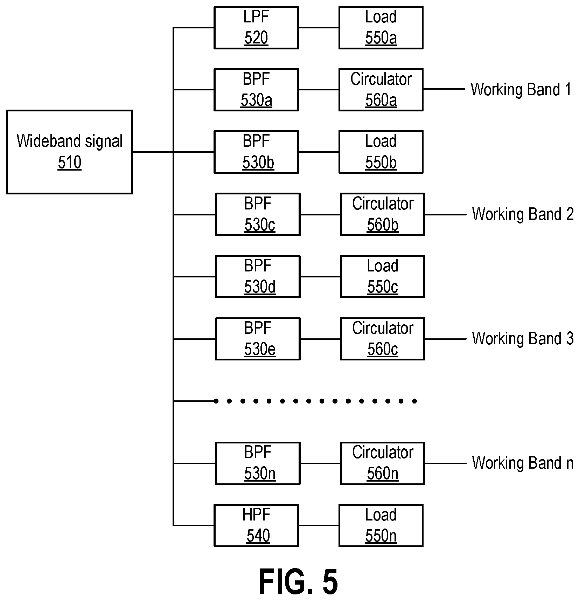

FIG. 5 illustrates an example of connecting bandpass, lowpass and high pass filters together. A wideband signal 510 is divided and provided to a low pass filter ("LPF") 520, band pass filters ("BPFs") 530a-n, and a high pass filter ("HPF") 540. Each of the filters associated with desired channels (e.g., working bands 1-n) are coupled to a corresponding circulator 560a-n while each of the undesired channels are connected with a load. This can result in a multiplexer only working in the wanted channel while no signal is reflected to back to a PA.

However, matching the LPF 520, BPFs 530a-c, and HPF 540 can be difficult. A BPF will introduce a large reactive component in the terminating impedance seen by the LPF/HPF in the pass band of the LPF/HPF. The LPF/HPF will also introduce a large reactive component to the termination seen by the BPF in the pass band of the BPF. These reactive components can make matching between BPF, LPF, and HPF difficult.

It can also be difficult to determine if the relative bandwidth of a BPF is more than 100%.

Various embodiments described herein include a multiplexer made of cascading LPFs and HPFs and wideband circulators. The multiplexer can split a whole wideband signal into many sub-bands. The bandwidth of the sub-bands can be over one octave. The working sub-bands are each connected with a wideband circulator and the unused sub-bands are each connected with a wideband load. The BPF can be connected in parallel with the wideband circulator. The signals between the working bands can be reflected by the BPF and absorbed by the wideband circulators. If all the working bands are within one octave, just one circulator is needed. The unused sub-bands can be very wide (more than one octave) but the working sub-bands will not be more than one octave due to the limitation of the circulator.

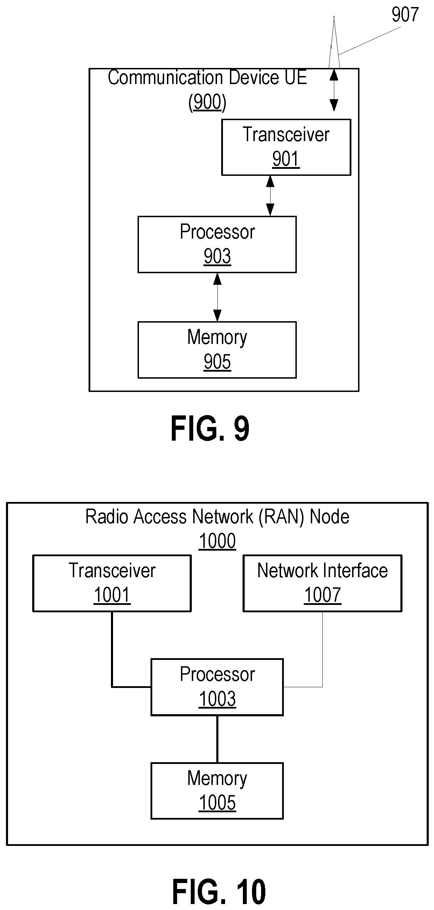

FIG. 9 is a block diagram illustrating elements of a communication device 900 (also referred to as a mobile terminal, a mobile communication terminal, a wireless device, a wireless communication device, a wireless terminal, mobile device, a wireless communication terminal, user equipment, UE, a user equipment node/terminal/device, etc.) configured to provide wireless communication according to embodiments of inventive concepts. As shown, communication device 900 may include an antenna 907, and transceiver circuitry 901 (also referred to as a transceiver) including a transmitter and a receiver configured to provide uplink and downlink radio communications with a base station(s) (also referred to as a RAN node) of a radio access network. Communication device 900 may also include processing circuitry 903 (also referred to as a processor) coupled to the transceiver circuitry, and memory circuitry 905 (also referred to as memory) coupled to the processing circuitry. The memory circuitry 905 may include computer readable program code that when executed by the processing circuitry 903 causes the processing circuitry to perform operations according to embodiments disclosed herein. According to other embodiments, processing circuitry 903 may be defined to include memory so that separate memory circuitry is not required. Communication device 900 may also include an interface (such as a user interface) coupled with processing circuitry 903, and/or communication device UE may be incorporated in a vehicle.

As discussed herein, operations of communication device 900 may be performed by processing circuitry 903 and/or transceiver circuitry 901. For example, processing circuitry 903 may control transceiver circuitry 901 to transmit communications through transceiver circuitry 901 over a radio interface to a radio access network node (also referred to as a base station) and/or to receive communications through transceiver circuitry 901 from a RAN node over a radio interface. Moreover, modules may be stored in memory circuitry 905, and these modules may provide instructions so that when instructions of a module are executed by processing circuitry 903, processing circuitry 903 performs respective operations.

FIG. 10 is a block diagram illustrating elements of a radio access network ("RAN") node 1000 (also referred to as a network node, base station, eNodeB/eNB, gNodeB/gNB, etc.) of a Radio Access Network (RAN) configured to provide cellular communication according to embodiments of inventive concepts. As shown, the RAN node 1000 may include transceiver circuitry 1001 (also referred to as a transceiver) including a transmitter and a receiver configured to provide uplink and downlink radio communications with mobile terminals. The RAN node 1000 may include network interface circuitry 1007 (also referred to as a network interface) configured to provide communications with other nodes (e.g., with other base stations) of the RAN and/or core network CN. The RAN node 1000 may also include processing circuitry 1003 (also referred to as a processor) coupled to the transceiver circuitry, and memory circuitry 1005 (also referred to as memory) coupled to the processing circuitry. The memory circuitry 1005 may include computer readable program code that when executed by the processing circuitry 1003 causes the processing circuitry to perform operations according to embodiments disclosed herein. According to other embodiments, processing circuitry 1003 may be defined to include memory so that a separate memory circuitry is not required.

As discussed herein, operations of the RAN node 1000 may be performed by processing circuitry 1003, network interface 1007, and/or transceiver 1001. For example, processing circuitry 1003 may control transceiver 1001 to transmit downlink communications through transceiver 1001 over a radio interface to one or more mobile terminals UEs and/or to receive uplink communications through transceiver 1001 from one or more mobile terminals UEs over a radio interface. Similarly, processing circuitry 1003 may control network interface 1007 to transmit communications through network interface 1007 to one or more other network nodes and/or to receive communications through network interface from one or more other network nodes. Moreover, modules may be stored in memory 1005, and these modules may provide instructions so that when instructions of a module are executed by processing circuitry 1003, processing circuitry 1003 performs respective operations (e.g., operations discussed below with respect to Example Embodiments relating to network nodes).

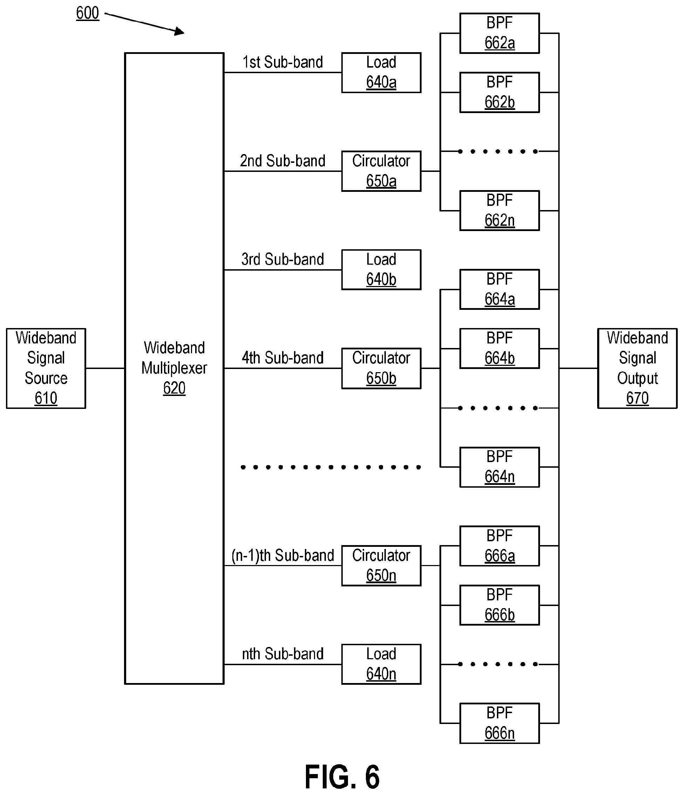

FIG. 6 illustrates an example of a wideband front-end with a wideband multiplexer 620. The wideband multiplexer 620 can receive the wideband signal from the wideband signal source 610 and divide the wideband signal into n number of sub-bands. Undesired sub-bands can be passed to loads 640a-n. Desired sub-bands can be passed to corresponding a first port of circulators 650a-n. A second port of each of the circulators 650a-n can be coupled to a unique set of BPFs 662-an, 664a-n, and 666a-n an output of which can be provided to wideband signal output 670.

In some embodiments, the wideband front-end is part of a transmitter. The wideband signal source 610 can include a driver and power amplifier for generating a wideband signal. The wideband signal output 670 can include an antenna for transmitting desired portions of the sub-bands.

In additional or alternative embodiments, the wideband front-end is part of a receiver. The wideband signal source 610 can include an antenna and the wideband signal output 670 can include processing circuitry for processing the desired portions of the sub-bands.

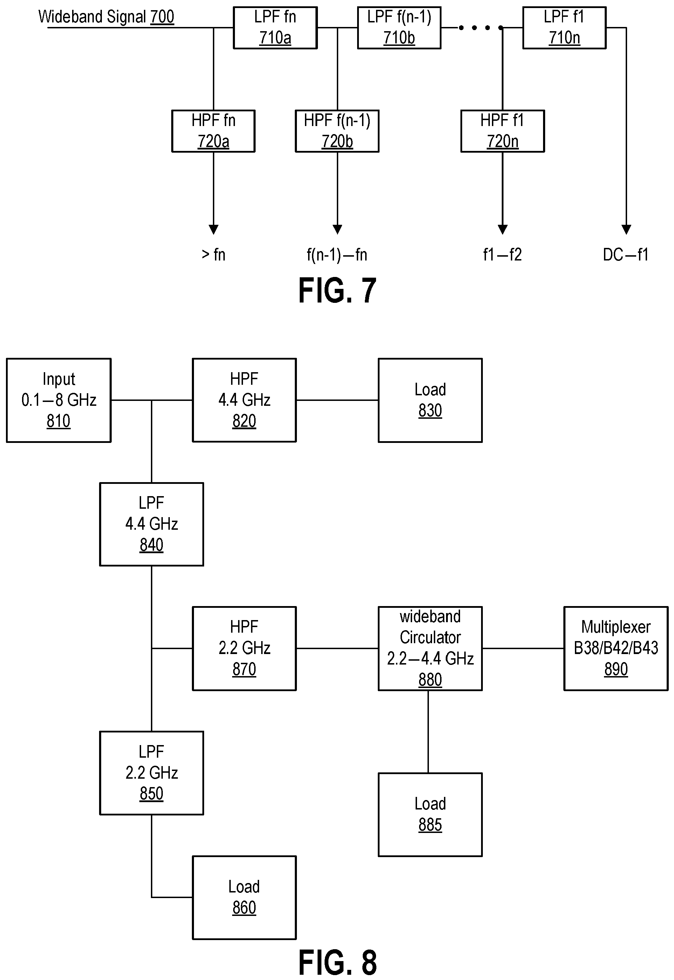

FIG. 7 illustrates an example of circuitry for implementing a wideband multiplexer (e.g., wideband multiplexer 620 in FIG. 6) using cascading LPFs 710a-n and HPFs 720a-n. A wideband signal 700, having a frequency range from DC to fn, can be input to both LPF 710a and HPF 720a. HPF 720a can have a cut-off frequency of fn such that any portion of the wideband signal 700 with a frequency higher than fn is output by the HPF 720a. The LPF 710 can have a cut-off frequency of fn such than any portion of the wideband signal 700 with a frequency less than fn is output by the LPF 710a.

The output of the LPF 710a can be provided (cascaded) as input to LPF 710b and HPF 720b. HPF 720b can have a cut-off frequency of f(n-1) such that any portion of the output of LPF 710a that is higher than f(n-1) is output by the HPF 720b. Therefore, HPF 720b outputs a portion of the wideband signal 700 with frequencies between f(n-1) and fn. LPF 710b can have a cut-off frequency of f(n-1) such that any portion of the output of LPF 710a that is less than f(n-1) is output by the LPF 710b.

The output of the LPF 710b can be passed (cascaded) through a series of LPFs and HPFs and a portion of the output of the LPF 710b (e.g., a portion having a frequency less than f2) can be provided to LPF 710n and HPF 720n. HPF 720n can have a cut-off frequency of f1 such that any portion of the remaining signal input into HPF 720n that is higher than f(1) is output by the HPF 720n. Therefore, HPF 720n outputs a portion of the wideband signal 700 with frequencies between f1 and f2. LPF 710n can have a cut-off frequency of f1 such that any portion of the remaining signal input into LPF 710n less than f1 is output by the LPF 710n. Therefore, LPF 710n output a portion of the wideband signal 700 with frequencies from 0 (direct current) to f1.

For the purpose of the present application, the expression "temporary sub-band" shall be understood as a frequency-limited portion of the wide-band signal signal that appears at the output of a low-pass (or high-pass) filter before it is processed by the next filter stage in cascade (e.g. the output of LPF 710a or the output of LPF 710b).

FIG. 8 illustrates an example of a front-end system handling a wideband signal having frequencies from 0.1 to 8 GHz, where a desired channel is from 2.2 to 4.4 GHz. A wideband signal 810 is provided to a HPF 820 and a LPF 840. The HPF 820 has a 4.4 GHz cut-off frequency and passes a portion of the wideband signal from 4.4 to 8 GHz (an undesired channel) to a load 830. The LPF 840 has a 4.4 GHz cut-off frequency and passes a portion of the wideband signal from 0.1 to 4.4. GHz to LPF 850 and HPF 870. The LPF 850 has a cut-off frequency of 2.2 GHz and passes a portion of the wideband signal from 0.1 to 2.2 GHz (an undesired channel) to a load 860. HPF 870 has a cut-off frequency of 2.2 GHz and passes a portion of the wideband signal from 2.2 to 4.4 GHz (a desired channel) to a first port of a wideband circulator 880. The wideband circulator can be configured to handle a portion of a wideband signal including frequencies from 2.2 to 4.4 GHz and pass the portion to multiplexer 890. The multiplexer 890 can include a series of BPFs and any reflected portion of the signal provided to the multiplexer 890 is provided to a second port of the wideband circulator 880, which can pass the portion to a third port of the wideband circulator that is coupled to load 885. A non-reflected (desired) portion of the signal provided to the multiplexer 890 can be provided as output of the front-end system to an antenna or processing circuitry.

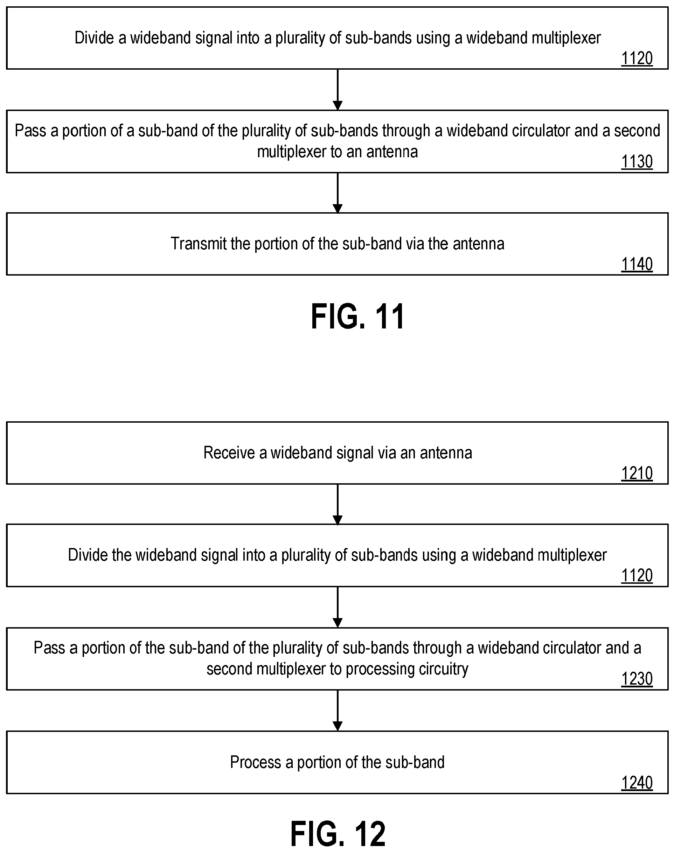

FIGS. 11-12 illustrates examples of processes performed by a network node (e.g., communication device 900 or RAN node 1000). FIGS. 11-12 will be described below as being performed by front-end 600 (implemented using the structure of the block diagram of FIG. 6).

FIG. 11 illustrates an example of operations performed by a front-end 600 implemented in a transmitter.

At block 1120, wideband multiplexer 620 divides a wideband signal into a plurality of sub-bands. In some embodiments, the wideband multiplexer 620 can include a series of cascading HPFs and LPFs (as in FIG. 7) that divide the wideband signal into the plurality of sub-bands. In additional or alternative embodiments, dividing the wideband signal into the plurality of sub-bands includes generating a first sub-band of the plurality of sub-bands by passing the wideband signal through a first HPF; generating a second sub-band of the plurality of sub-bands by passing the wideband signal through a first LPF followed by a second HPF; and generating a third sub-band of the plurality of sub-bands by passing the wideband signal through a first LPF followed by a second LPF followed by a third HPF.

At block 1130, circulator 650a-n passes a portion of a sub-band of the plurality of sub-bands from a first port to an antenna (e.g., antenna 907 of FIG. 9 or transceiver 1001 of FIG. 10) via a second port and through a second multiplexer (e.g., BPFs 662a-n in FIG. 6 or multiplexer 890 in FIG. 8). The portion may be a first portion of the sub-band. In some embodiments, passing the portion of the sub-band from the first port of the wideband circulator 650a-n to the antenna via the second port of the wideband circulator 650a-n includes passing the sub-band from the first port of the wideband circulator 650a-n to the second port of the wideband circulator 650a-n and responsive to passing the sub-band from the first port of the wideband circulator 650a-n to the second port of the wideband circulator, providing the sub-band to the second multiplexer Responsive to providing the sub-band to the second multiplexer, the second multiplexer can divide the sub-band into the first portion and a second portion.

In accordance with the present invention, responsive to dividing the sub-band into the first portion of the sub-band and the second portion of the sub-band, the second multiplexer reflects the second portion of the sub-band to the second port of the wideband circulator 650a-n. Responsive to the second portion of the sub-band being reflected to the second port of the wideband circulator 650an, the wideband circulator 650a-n passes the second portion of the sub-band from the second port to a load via a third port of the wideband circulator 650a-n.

Furthermore, responsive to dividing the sub-band into the first portion of the sub-band, the second multiplexer passes the first portion of the sub-band to the antenna.

At block 1140, the antenna transmits the portion of the sub-band via the antenna.

FIG. 12 illustrates an example of operations performed by a front-end 600 implemented in a receiver. At block 1210, an antenna (e.g., antenna 907 of FIG. 9 or transceiver 1001 of FIG. 10) receives a wideband signal. Block 1120 is the same as in FIG. 11. The wideband multiplexer 620 divides the wideband signal into a plurality of sub-bands. At block 1230, the circulator 650a-n passes a portion of a sub-band of the plurality of sub-bands from a first port to processing circuitry (e.g., processing circuitry 903 of FIG. 9 or processing circuitry 1003 of FIG. 10) via a second port and through a second multiplexer (e.g., a narrowband multiplexer). In some embodiments similar operations to those described in block 1130 of FIG. 11 may be performed at block 1230. At block 1240, the processing circuitry processes the portion of the sub-band.

Various operations of FIGS. 11-12 may be optional with respect to some embodiments of network nodes and related methods. In some methods, for example, operations of block 1140 of FIG. 11 and blocks 1210 and 1240 of FIG. 12 may be optional. Additionally, the various operations of FIGS. 11-12 can be combined or arranged in any appropriate order and be within the intended scope of this disclosure.

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- CA: Carrier Aggregation
- CC: Carrier Component
- CCCH SDU: Common Control Channel SDU
- CDMACode: Division Multiplexing Access
- CGI: Cell Global Identifier
- CIR: Channel Impulse Response
- CP: Cyclic Prefix
- CPICH: Common Pilot Channel
- CPICH: Ec/No CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FFS: For Further Study
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- TSS: Tertiary Synchronization Signal
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the scope of present inventive concepts. Thus, the scope of the present invention is to be determined by the appended claims.

## Claims

1. A method of operating a network node in a communications network, the method comprising:
dividing (1120) a wideband signal into a plurality of sub-bands using a wideband multiplexer of the network node comprising a series of high band filters ,HFPs, and low band filters ,LFPs; and
passing (1130, 1230) a portion of a sub-band of the plurality of sub-bands through a wideband circulator of the network node and a second multiplexer of the network node to an antenna or processing circuitry of the network node wherein the portion of the sub-band is a first portion of the sub-band,
wherein passing the portion of the sub-band to the antenna or the processing circuitry comprises:
passing the sub-band from a first port of the wideband circulator to a second port of the wideband circulator;
responsive to passing the sub-band from the first port of the wideband circulator to the second port of the wideband circulator, providing the sub-band to the second multiplexer; and
responsive to providing the sub-band to the second multiplexer, dividing the sub-band into the first portion and a second portion using the second multiplexer
responsive to dividing the sub-band into the first portion of the sub-band and the second portion of the sub-band, reflecting the second portion of the sub-band to the second port of the wideband circulator; and
responsive to reflecting the second portion of the sub-band to the second port of the wideband circulator, passing the second portion of the sub-band from the second port to a load via a third port of the wideband circulator.

2. The method of claim 1, wherein dividing the wideband signal comprises:
generating a first sub-band of the plurality of sub-bands by passing the wideband signal through a first HPF;
generating a second sub-band of the plurality of sub-bands by passing the wideband signal through a first LPF followed by a second HPF; and
generating a third sub-band of the plurality of sub-bands by passing the wideband signal through a first LPF followed by a second LPF followed by a third HPF.

3. The method of any of claims 1-2, wherein passing the first portion of the sub-band to the antenna or the processing circuitry further comprises:
responsive to dividing the sub-band into the first portion of the sub-band, passing the first portion of the sub-band to the antenna or the processing circuitry.

4. The method of any of claims 1-3, wherein the network node comprises a transmitter, and
wherein the portion of the sub-band of the plurality of sub-bands is passed to the antenna of the network node,
the method further comprising:
transmitting (1140) the portion of the sub-band via the antenna.

5. The method of any of claims 1-4, wherein the network node comprises a receiver, and
wherein the portion of the sub-band of the plurality of sub-bands is passed to the processing circuitry of the network node,
the method further comprising:
receiving (1210), prior to dividing the wideband signal, the wideband signal via the antenna of the receiver.

6. The method of any of claims 1-5, wherein the network node comprises a radio access network, RAN, node, and
wherein the communications network comprises a new radio, NR, network or wherein the network node comprises a communication device and
wherein the communications network comprises a new radio, NR, network.

7. A network node (900, 1000) operating in a communications network, the network node comprising:
a wideband multiplexer, comprising a series of cascading high pass filters, HPFs, and low pass filters, LPFs, configured to divide (1120) a wideband signal into a plurality of sub-bands;
a wideband circulator coupled to an output of the wideband multiplexer and including a first port and a second port, the wideband circulator configured to pass (1130, 1230) a sub-band of the plurality of sub-bands from the first port to a second port; and a second multiplexer coupled to the second port of the wideband circulator and configured to divide the sub-band into a first portion and a second portion wherein the second multiplexer is a narrowband multiplexer and comprises band pass filters configured to divide the sub-band into the first portion and the second portion wherein the second multiplexer is further configured to reflect the second portion of the sub-band to the second port of the wideband circulator, and
wherein the wideband circulator further includes a third port and is further configured to pass the second portion of the sub-band to a load via the third port.

8. The network node of claim 7, wherein the series of cascading HPFs and LPFs comprises:
a first HPF configured to receive the wideband signal and generate a first sub-band of the plurality of sub-bands;
a first LPF configured to receive the wideband signal and generate a first temporary sub-band;
a second HPF configured to receive the first temporary sub-band and generate a second sub-band of the plurality of sub-bands;
a second LPF configured to receive the first temporary sub-ban and generate a second temporary sub-band; and
a third HPF configured to receive the second temporary sub-band and generate a third sub-band of the plurality of sub-bands.

9. The network node of any of claims 7-8, wherein an antenna or processing circuitry is coupled to the second port of the wideband circulator via the second multiplexer, and
wherein the second multiplexer is further configured to pass the first portion of the sub-band to the antenna or the processing circuitry.

10. The network node of any of claims 7-9, wherein the network node comprises a transmitter (901, 1001), the transmitter comprising:
an antenna coupled to the second multiplexer and configured to transmit (1140) the first portion of the sub-band.

11. The network node of any of claims 7-10, wherein the network node comprises a receiver (901, 1001), the receiver comprising:
an antenna configured to receive (1210) the wideband signal; and
processing circuitry coupled to the second multiplexer and configured to process (1240) the first portion of the sub-band.

12. The network node of any of claims 7-11, wherein the network node is a radio access network, RAN, node, and
wherein the communications network comprises a new radio, NR, network or wherein the network node is a communication device and
wherein the communications network comprises a new radio, NR, network.

13. A computer program comprising program code to be executed by processing circuitry (903, 1003) of a network node (900, 1000) operating in a communications network, whereby execution of the program code causes the network node to perform operations according to any of claims 1-6

14. A computer program product comprising a non-transitory storage medium including program code to be executed by processing circuitry (903, 1003) of a network node (900, 1000) operating in a communications network, whereby execution of the program code causes the network node to perform operations according to any of claims 1-6.

## Patentansprüche

1. Verfahren zum Betreiben eines Netzwerkknotens in einem Kommunikationsnetzwerk, wobei das Verfahren umfasst:
Aufteilen (1120) eines Breitbandsignals in eine Vielzahl von Teilbändern unter Verwendung eines Breitband-Multiplexers des Netzwerkknotens, der eine Folge von Hochbandfiltern, HFPs, und Tiefbandfiltern, LFPs, umfasst; und
Leiten (1130, 1230) eines Abschnitts eines Teilbands aus der Vielzahl von Teilbändern durch einen Breitband-Zirkulator des Netzwerkknotens und einen zweiten Multiplexer des Netzwerkknotens zu einer Antenne oder Verarbeitungsschaltung des Netzwerkknotens, wobei der Abschnitt des Teilbands ein erster Abschnitt des Teilbands ist,
wobei Leiten des Abschnitts des Teilbands zur Antenne oder zur Verarbeitungsschaltung umfasst:
Leiten des Teilbands von einem ersten Anschluss des Breitband-Zirkulators zu einem zweiten Anschluss des Breitband-Zirkulators;
als Antwort auf Leiten des Teilbands vom ersten Anschluss des Breitband-Zirkulators zum zweiten Anschluss des Breitband-Zirkulators, Bereitstellen des Teilbands für den zweiten Multiplexer; und
als Antwort auf das Bereitstellen des Teilbands für den zweiten Multiplexer, Aufteilen des Teilbands unter Verwendung des zweiten Multiplexers in den ersten Abschnitt und einen zweiten Abschnitt
als Antwort auf Aufteilen des Teilbands in den ersten Abschnitt des Teilbands und den zweiten Abschnitt des Teilbands, Reflektieren des zweiten Abschnitts des Teilbands zum zweiten Anschluss des Breitband-Zirkulators; und
als Antwort auf Reflektieren des zweiten Abschnitts des Teilbands zum zweiten Anschluss des Breitband-Zirkulators, Leiten des zweiten Abschnitts des Teilbands vom zweiten Anschluss über einen dritten Anschluss des Breitband-Zirkulators zu einer Last.

2. Verfahren nach Anspruch 1, wobei Aufteilen des Breitbandsignals umfasst:
Erzeugen eines ersten Teilbands aus der Vielzahl von Teilbändern durch Leiten des Breitbandsignals durch ein erstes HPF;
Erzeugen eines zweiten Teilbands aus der Vielzahl von Teilbändern durch Leiten des Breitbandsignals durch ein erstes LPF, gefolgt von einem zweiten HPF; und
Erzeugen eines dritten Teilbands aus der Vielzahl von Teilbändern durch Leiten des Breitbandsignals durch ein erstes LPF, gefolgt von einem zweiten LPF, gefolgt von einem dritten HPF.

3. Verfahren nach einem der Ansprüche 1-2, wobei Leiten des ersten Abschnitts des Teilbands zur Antenne oder zur Verarbeitungsschaltung ferner umfasst:
als Antwort auf Aufteilen des Teilbands in den ersten Abschnitt des Teilbands, Leiten des ersten Abschnitts des Teilbands zur Antenne oder zur Verarbeitungsschaltung.

4. Verfahren nach einem der Ansprüche 1-3, wobei der Netzwerkknoten einen Sender umfasst, und
wobei der Abschnitt des Teilbands aus der Vielzahl von Teilbändern zur Antenne des Netzwerkknotens geleitet wird,
wobei das Verfahren ferner umfasst:
Senden (1140) des Abschnitts des Teilbands über die Antenne.

5. Verfahren nach einem der Ansprüche 1-4, wobei der Netzwerkknoten einen Empfänger umfasst, und
wobei der Abschnitt des Teilbands aus der Vielzahl von Teilbändern zur Verarbeitungsschaltung des Netzwerkknotens geleitet wird,
wobei das Verfahren ferner umfasst:
Empfangen (1210) des Breitbandsignals über die Antenne des Empfängers vor dem Aufteilen des Breitbandsignals.

6. Verfahren nach einem der Ansprüche 1-5, wobei der Netzwerkknoten einen Knoten eines Funkzugangsnetzwerks, RAN, umfasst, und
wobei das Kommunikationsnetzwerk ein Neufunk-, NR, Netzwerk umfasst oder wobei der Netzwerkknoten eine Kommunikationsvorrichtung umfasst und
wobei das Kommunikationsnetzwerk ein Neufunk-, NR, Netzwerk umfasst.

7. Netzwerkknoten (900, 1000), der in einem Kommunikationsnetzwerk arbeitet, wobei der Netzwerkknoten umfasst:
einen Breitband-Multiplexer, der eine Folge von kaskadierten Hochpassfiltern, HPFs, und Tiefpassfiltern, LPFs, umfasst und dafür konfiguriert ist, ein Breitbandsignal in eine Vielzahl von Teilbändern aufzuteilen (1120);
einen Breitband-Zirkulator, der mit einem Ausgang des Breitband-Multiplexers gekoppelt ist und einen ersten Anschluss und einen zweiten Anschluss einschließt, wobei der Breitband-Zirkulator dafür konfiguriert ist, ein Teilband aus der Vielzahl von Teilbändern vom ersten Anschluss zum zweiten Anschluss zu leiten (1130, 1230); und
einen zweiten Multiplexer, der mit dem zweiten Anschluss des Breitband-Zirkulators gekoppelt und dafür konfiguriert ist, das Teilband in einen ersten Abschnitt und einen zweiten Abschnitt aufzuteilen,
wobei der zweite Multiplexer ein Schmalband-Multiplexer ist und Bandpassfilter umfasst, die dafür konfiguriert sind, das Teilband in den ersten Abschnitt und den zweiten Abschnitt aufzuteilen, wobei der zweite Multiplexer ferner dafür konfiguriert ist, den zweiten Abschnitt des Teilbands zum zweiten Anschluss des Breitband-Zirkulators zu reflektieren, und
wobei der Breitband-Zirkulator ferner einen dritten Anschluss einschließt und ferner dafür konfiguriert ist, den zweiten Abschnitt des Teilbands über den dritten Anschluss zu einer Last zu leiten.

8. Netzwerkknoten nach Anspruch 7, wobei die Folge von kaskadierten HPFs und LPFs umfasst:
ein erstes HPF, das dafür konfiguriert ist, das Breitbandsignal zu empfangen und ein erstes Teilband aus der Vielzahl von Teilbändern zu erzeugen;
ein erstes LPF, das dafür konfiguriert ist, das Breitbandsignal zu empfangen und ein erstes temporäres Teilband zu erzeugen;
ein zweites HPF, das dafür konfiguriert ist, das erste temporäre Teilband zu empfangen und ein zweites Teilband aus der Vielzahl von Teilbändern zu erzeugen;
ein zweites LPF, das dafür konfiguriert ist, das erste temporäre Teilband zu empfangen und ein zweites temporäres Teilband zu erzeugen; und
ein drittes HPF, das dafür konfiguriert ist, das zweite temporäre Teilband zu empfangen und ein drittes Teilband aus der Vielzahl von Teilbändern zu erzeugen.

9. Netzwerkknoten nach einem der Ansprüche 7-8, wobei eine Antenne oder eine Verarbeitungsschaltung über den zweiten Multiplexer mit dem zweiten Anschluss des Breitband-Zirkulators gekoppelt ist, und
wobei der zweite Multiplexer ferner dafür konfiguriert ist, den ersten Abschnitt des Teilbands zur Antenne oder zur Verarbeitungsschaltung zu leiten.

10. Netzwerkknoten nach einem der Ansprüche 7-9, wobei der Netzwerkknoten einen Sender (901, 1001) umfasst, wobei der Sender umfasst:
eine Antenne, die mit dem zweiten Multiplexer gekoppelt und dafür konfiguriert ist, den ersten Abschnitt des Teilbands zu senden (1140).

11. Netzwerkknoten nach einem der Ansprüche 7-10, wobei der Netzwerkknoten einen Empfänger (901, 1001) umfasst, wobei der Empfänger umfasst:
eine Antenne, die dafür konfiguriert ist, das Breitbandsignal zu empfangen (1210); und
eine Verarbeitungsschaltung, die mit dem zweiten Multiplexer gekoppelt und dafür konfiguriert ist, den ersten Abschnitt des Teilbands zu verarbeiten (1240).

12. Netzwerkknoten nach einem der Ansprüche 7-11, wobei der Netzwerkknoten ein Knoten des Funkzugangsnetzwerks, RAN, ist, und
wobei das Kommunikationsnetzwerk ein Neufunk-, NR, Netzwerk umfasst oder wobei der Netzwerkknoten eine Kommunikationsvorrichtung ist und
wobei das Kommunikationsnetzwerk ein Neufunk-, NR, Netzwerk umfasst.

13. Computerprogramm, das Programmcode umfasst, der durch eine Verarbeitungsschaltung (903, 1003) eines in einem Kommunikationsnetzwerk arbeitenden Netzwerkknotens (900, 1000) ausgeführt werden soll, wobei die Ausführung des Programmcodes den Netzwerkknoten veranlasst, Operationen nach einem der Ansprüche 1-6 durchzuführen.

14. Computerprogrammprodukt, das ein nichtflüchtiges Speichermedium umfasst, das Programmcode einschließt, der durch eine Verarbeitungsschaltung (903, 1003) eines in einem Kommunikationsnetzwerk arbeitenden Netzwerkknotens (900, 1000) ausgeführt werden soll, wobei die Ausführung des Programmcodes den Netzwerkknoten veranlasst, Operationen nach einem der Ansprüche 1-6 durchzuführen.

## Revendications

1. Procédé de fonctionnement d'un nœud de réseau dans un réseau de communication, le procédé comprenant :
la division (1120) d'un signal à large bande en une pluralité de sous-bandes à l'aide d'un multiplexeur à large bande du nœud de réseau comprenant une série de filtres de bande haute, HFP, et de filtres de bande basse, LFP ; et
le passage (1130, 1230) d'une partie d'une sous-bande parmi la pluralité de sous-bandes à travers un circulateur à large bande du nœud de réseau et un second multiplexeur du nœud de réseau à une antenne ou une circuiterie de traitement du nœud de réseau, dans lequel la partie de la sous-bande est une première partie de la sous-bande,
dans lequel le passage de la partie de la sous-bande à l'antenne ou à la circuiterie de traitement comprend :
le passage de la sous-bande d'un premier port du circulateur à large bande à un deuxième port du circulateur à large bande ;
en réponse au passage de la sous-bande du premier port du circulateur à large bande au deuxième port du circulateur à large bande, la fourniture de la sous-bande au second multiplexeur ; et
en réponse à la fourniture de la sous-bande au second multiplexeur, la division de la sous-bande en la première partie et une deuxième partie à l'aide du second multiplexeur,
en réponse à la division de la sous-bande en la première partie de la sous-bande et la deuxième partie de la sous-bande, la réflexion de la deuxième partie de la sous-bande vers le deuxième port du circulateur à large bande ; et
en réponse à la réflexion de la deuxième partie de la sous-bande vers le deuxième port du circulateur à large bande, le passage de la deuxième partie de la sous-bande du deuxième port vers une charge via un troisième port du circulateur à large bande.

2. Procédé selon la revendication 1, dans lequel la division du signal à large bande comprend :
la génération d'une première sous-bande parmi la pluralité de sous-bandes par le passage du signal à large bande à travers un premier HPF ;
la génération d'une deuxième sous-bande parmi la pluralité de sous-bandes par le passage du signal à large bande à travers un LPF suivi d'un deuxième HPF ; et
la génération d'une troisième sous-bande parmi la pluralité de sous-bandes par le passage du signal à large bande à travers un premier LPF suivi d'un deuxième LPF suivi d'un troisième HPF.

3. Procédé selon l'une quelconque des revendications 1-2, dans lequel le passage de la première partie de la sous-bande à l'antenne ou à la circuiterie de traitement comprend en outre :
en réponse à la division de la sous-bande en la première partie de la sous-bande, le passage de la première partie de la sous-bande à l'antenne ou à la circuiterie de traitement.

4. Procédé selon l'une quelconque des revendications 1-3, dans lequel le nœud de réseau comprend un émetteur, et
dans lequel la partie de la sous-bande parmi la pluralité de sous-bandes est passée à l'antenne du nœud de réseau,
le procédé comprenant en outre :
la transmission (1140) de la partie de la sous-bande via l'antenne.

5. Procédé selon l'une quelconque des revendications 1-4, dans lequel le nœud de réseau comprend un récepteur, et
dans lequel la partie de la sous-bande parmi la pluralité de sous-bandes est passée à la circuiterie de traitement du nœud de réseau,
le procédé comprenant en outre :
la réception (1210), avant la division du signal à large bande, du signal à large bande via l'antenne du récepteur.

6. Procédé selon l'une quelconque des revendications 1-5, dans lequel le nœud de réseau comprend un nœud de réseau d'accès radio, RAN, et
dans lequel le réseau de communication comprend un réseau nouvelle radio, NR, ou dans lequel le nœud de réseau comprend un dispositif de communication et
dans lequel le réseau de communication comprend un réseau nouvelle radio, NR.

7. Nœud de réseau (900, 1000) fonctionnant dans un réseau de communication, le nœud de réseau comprenant :
un multiplexeur à large bande, comprenant une série de filtres de bande haute, HPF, et de filtres de bande basse, LPF, en cascade, configuré pour diviser (1120) un signal à large bande en une pluralité de sous-bandes ;
un circulateur à large bande couplé à une sortie du multiplexeur à large bande et incluant un premier port et un deuxième port, le circulateur à large bande étant configuré pour passer (1130, 1230) une sous-bande parmi la pluralité de sous-bandes du premier port à un deuxième port ; et un second multiplexeur couplé au deuxième port du circulateur à large bande et configuré pour diviser la sous-bande en une première et une deuxième partie,
dans lequel le second multiplexeur est un multiplexeur à bande étroite et comprend des filtres passe-bande configurés pour diviser la sous-bande en la première partie et la deuxième partie, dans lequel le second multiplexeur est en outre configuré pour réfléchir la deuxième partie de la sous-bande vers le deuxième port du circulateur à large bande, et
dans lequel le circulateur à large bande inclut en outre un troisième port et est en outre configuré pour passer la deuxième partie de la sous-bande à une charge via le troisième port.

8. Nœud de réseau selon la revendication 7, dans lequel la série de HPF et de LPF en cascade comprend :
un premier HPF configuré pour recevoir le signal à large bande et générer une première sous-bande parmi la pluralité de sous-bandes ;
un premier LPF configuré pour recevoir le signal à large bande et générer une première sous-bande temporaire ;
un deuxième HPF configuré pour recevoir la première sous-bande temporaire et générer une deuxième sous-bande parmi la pluralité de sous-bandes ;
un deuxième LPF configuré pour recevoir la première sous-bande temporaire et générer une deuxième sous-bande temporaire ; et
un troisième HPF configuré pour recevoir la deuxième sous-bande temporaire et générer une troisième sous-bande parmi la pluralité de sous-bandes.

9. Nœud de réseau selon l'une quelconque des revendications 7-8, dans lequel une antenne ou une circuiterie de traitement est couplée au deuxième port du circulateur à large bande via le second multiplexeur, et
dans lequel le second multiplexeur est en outre configuré pour passer la première partie de la sous-bande à l'antenne ou à la circuiterie de traitement.

10. Nœud de réseau selon l'une quelconque des revendications 7-9, dans lequel le nœud de réseau comprend un émetteur (901, 1001), l'émetteur comprenant :
une antenne couplée au second multiplexeur et configurée pour transmettre (1140) la première partie de la sous-bande.

11. Nœud de réseau selon l'une quelconque des revendications 7-10, dans lequel le nœud de réseau comprend un récepteur (901, 1001), le récepteur comprenant :
une antenne configurée pour recevoir (1210) le signal à large bande ; et
une circuiterie de traitement couplée au second multiplexeur et configurée pour traiter (1240) la première partie de la sous-bande.

12. Nœud de réseau selon l'une quelconque des revendications 7-11, dans lequel le nœud de réseau est un nœud de réseau d'accès radio, RAN, et
dans lequel le réseau de communication comprend un réseau nouvelle radio, NR, ou dans lequel le nœud de réseau est un dispositif de communication et
dans lequel le réseau de communication comprend un réseau nouvelle radio, NR.

13. Programme informatique comprenant un code de programme à exécuter par une circuiterie de traitement (903, 1003) d'un nœud de réseau (900, 1000) fonctionnant dans un réseau de communication, selon lequel l'exécution du code de programme amène le nœud de réseau à réaliser des opérations selon l'une quelconque des revendications 1-6.

14. Produit de programme informatique comprenant un support de stockage non transitoire incluant un code de programme à exécuter par une circuiterie de traitement (903, 1003) d'un nœud de réseau (900, 1000) fonctionnant dans un réseau de communication, selon lequel l'exécution du code de programme amène le nœud de réseau à réaliser des opérations selon l'une quelconque des revendications 1-6.
